# EUROPÄISCHE PATENTSCHRIFT

(11) **EP 0 807 274 B1**
(45) Veröffentlichungstag und Bekanntmachung des Hinweises auf die Patenterteilung: **28.10.1998**
(21) Anmeldenummer: 96903954.4
(22) Anmeldetag: 01.02.1996
(51) Int. Cl.: G02B 21/22, G02B 21/36, H04N 13/02

(54) **STEREOMIKROSKOP**
STEREOMICROSCOPE
STEREOMICROSCOPE

(30) Priorität: 03.02.1995 CH 303/95
(43) Veröffentlichungstag der Anmeldung: 19.11.1997
(73) Patentinhaber: Leica Mikroskopie Systeme AG, 9435 Heerbrugg (CH)
(72) Erfinder: SPINK, Roger, CH-9442 Berneck (CH)
(74) Vertreter: Stamer, Harald
(86) Internationale Anmeldenummer: EP9600406
(87) Internationale Veröffentlichungsnummer: WO9624083

(56) Entgegenhaltungen:
- DE-A- 4 243 452
- DE-A- 4 243 556
- GB-A- 1 473 537
- US-A- 4 802 749
- PATENT ABSTRACTS OF JAPAN vol. 14, no. 128 (P-1019), 9.März 1990 & JP,A,01 319721 (NIKON), 26.Dezember 1989,

## Beschreibung

Die Erfindung betrifft ein Stereomikroskop nach dem Anspruch 1.

Es sind bereits Stereomikroskope mit geometrischer Überlagerung bzw. im wesentlichen gemeinsamem Strahlengang des rechten und des linken Teilbildes bekannt. Diese bekannten Stereomikroskope haben den Vorteil, dass für zwei stereoskopische Strahlengänge lediglich eine Vergrösserungseinrichtung (Zoom, Wechsler) notwendig ist. Entsprechend fällt auch eine Justierung der linken und rechten Optiken zueinander weg.

Um zu verhindern, dass gleichzeitig Licht von beiden Teilbildern auf die gemeinsame Bildaufnahmevorrichtung gelangt, wird etwa für die beiden Teilbilder verschieden polarisiertes Licht verwendet, so dass ein polarisationsabhängiger Strahlenteiler jeweils das gewünschte Teilbild bzw. Licht mit der gewünschten Polarisation, auf die Bildaufnahmevorrichtung gelangen lässt. Derartige Lösungen sind aufwendig und schwächen die Lichtintensität unerwünscht stark ab. Um die Lichtintensität der beiden alternierend auf die Bildaufnahmevorrichtung gelangenden Teilbilder nur minimal zu reduzieren, wurden Lösungen entwickelt, bei denen eine bewegte Spiegelfläche alternierend ein Teilbild in den gemeinsamen Strahlengang einbringt und das andere abdeckt, vgl. die CH-Patentanmeldung Nr. 1525/94-0. Bewegte Spiegel haben aber den Nachteil, dass die genaue Ausrichtung derselben durch die Bewegbarkeit beeinträchtigt wird und dass die auf die Bewegungsvorrichtung wirkenden Trägheitskräfte aufgrund der Spiegelmasse so hoch sind, dass die Bewegungsvorrichtung robust ausgeführt und befestigt werden muss.

In der GB-A-1473537 ist ein Aufbau mit prismatischen Glaskeilen zur Umlenkung zweier paralleler Strahlengänge auf ein Objekt dargestellt. Glaskeile können Farbaberrationsprobleme mit sich bringen.

Die DE-A-4243556 zeigt einen Aufbau mit einem Shutterrad, das einmal den einen, dann den anderen Strahlengang eines stereoskopischen Strahlenganges freigibt, wobei die beiden Strahlengänge räumlich über Spiegel zu unterschiedlichen Zeiten überlagerbar sind. Bei diesem Aufbau ergeben sich unterschiedliche Lichtwege in den beiden stereoskopischen Teilstrahlengängen und zu einem quasi sinusförmigen Lichtwechsel der Lichtintensitäten in den beiden Teilstrahelngängen.

Die DE-A-4243452 zeigt einen Aufbau, welcher vergleichbar ist mit der erwähnten DE-A-4243556 und in der JP-A-1319721 ist eine Anordnung dargestellt, die mit derjenigen in der DE-A-4243556 vergleichbar ist, wobei an Stelle eines Shutterrades elektronisch angesteuerte Shutter, die abwechselnd den einen und den anderen Teilstrahlengang freigeben, vorgesehen sind.

Die erfindungsgemässe Aufgabe besteht nun darin, eine Strahlüberlagerungsanordnung zu finden, die unter Verwendung einfacher Bauteile mit einem möglichst kleinen Lichtverlust das linke und das rechte Teilbild durch eine gemeinsame Optik ungestört einer Bildaufnahmevorrichtung zuführt.

Die erfindungsgemässe Lösung gestaltet sich gemäss den Merkmalen des Anspruches 1. Die beiden stereoskopischen Teilstrahlengänge bzw. der linke und der rechte Strahlengang haben zumindest in einem Teilbereich des gemeinsamen Strahlenganges räumlich zumindest teilweise Teilpupillen, die im Strahlengang des Hauptobjektives auf Überlagerungspiegeln liegen.

Die beiden stereoskopischen Teilstrahlengänge bzw. der linke und der rechte Strahlengang haben zumindest in einem Teilbereich des gemeinsamen Strahlenganges räumlich zumindest teilweise getrennte Teilpupillen. Dazu werden, vorzugsweise vom Objekt aus gesehen direkt nach dem Hauptobjektiv, die beiden im wesentlichen parallel nebeneinander verlaufenden Teilstrahlengänge durch mindestens zwei Spiegel entlang einer gemeinsamen Achse umgelenkt. Die Anordnung der Spiegel ist so gewählt, dass sich von beiden Teilstrahlen bzw. von ihren Teilpupillen mit Schwerpunkten seitlich der Achse des gemeinsamen Strahlenganges, in Pupillenebenen räumlich getrennte Lichtbündel im gemeinsamen Strahlengang ausbreiten. Von den Spiegeln wird maximal das Licht der halben Pupille jedes Teilstrahles in den gemeinsamen Strahlengang eingeführt.

Um einer Bildaufnahmevorrichtung nur das Licht eines Teilstrahlenganges zukommen zu lassen, muss weder ein Strahlenteiler noch ein rotierender Spiegel, sondern lediglich eine Trennvorrichtung mit mindestens einer bewegbaren Blende, oder mindestens einem im wesentlichen festen bzw. etwa entlang der gemeinsamen Achse verstellbaren, Umlenkspiegel verwendet werden. Die mindestens eine bewegbare Blende muss die Teilstrahlen alternierend abdecken, so dass der eine Teilstrahl im wesentlichen vollständig unterbrochen ist, solange ein nicht vernachlässigbarer Lichtanteil des anderen Teilstrahles durch die Blende durchtritt. Dazu wird sie entweder im Bereich mit getrennten Teilstrahlengängen, oder aber im gemeinsamen Strahlengang in Bereichen von Pupillenebenen angeordnet. Entsprechend wird bei Ausführungsformen mit mindestens einem Umlenkspiegel mindestens einer dieser Spiegel so in einer Pupillenebene angeordnet, dass ein Teilstrahlengang aus der gemeinsamen Optik bzw. dem gemeinsamen Strahlengang, ausgekoppelt wird. Da sich die Pupillenebenen beim Verstellen der gemeinsamen Optik verschieben können, werden vorzugsweise eine Steuerung und eine Verstellvorrichtung vorgesehen, die gewährleisten, dass die Blende bzw. der Umlenkspiegel, im gemeinsamen Strahlengang im wesentlichen in einer Pupillenebene liegt.

Da die Teilpupillen bzw. die Lichtbündel, der Teilstrahlen in Pupillenebenen räumlich getrennt, vorzugsweise einander gegenüberliegend beiderseits der optischen Achse des gemeinsamen Strahlenganges, angeordnet sind, kann beispielsweise die Teilpupille des rechten Strahlenganges im wesentlichen vollständig durch die Blende abgedeckt werden, während zumindest ein Teil der Teilpupille des linken Teilstrahles frei bleibt. Die Bildaufnahmevorrichtung erhält ein vollständiges Bild der linken Stereobasis, dessen Intensität aber reduziert ist, weil lediglich das Licht einer Teilpupille bzw. des nicht von der Blende abgedeckten Lichtbündels, zur Abbildung gelangt.

Die Blende umfasst zumindest ein bewegbares Teil. Im Sinne der Erfindung ist es dabei nicht wesentlich, in welcher Form die Blenden eingebracht werden. Translatorische Bewegungen sind dabei gleichzusetzen mit rotierenden Bewegungen oder sonstigen Schaltbewegungen. Gegebenenfalls ist das bewegbare Teil im wesentlichen zwischen einer ersten und einer zweiten Position parallel verschiebbar, wobei das Teil etwa in der ersten Position im Bereich des rechten Teilstrahls bzw. des Lichtbündels des rechten Strahls, liegt, den linken Teilstrahl aber im wesentlichen nicht beeinträchtigt. In der zweiten Position wird entsprechend der linke Teilstrahl bzw. sein Lichtbündel, abgedeckt und das Licht des rechten Strahls gelangt zur Bildaufnahmevorrichtung. Bevorzugte Blenden umfassen mindestens ein um eine Blendenachse drehendes Teil, das mindestens einen Abdeck- und einen Durchlassbereich umfasst, so dass während einer Umdrehung für mindestens einen Teilstrahl bzw. ein Lichtbündel, eine Abdeck- und eine Durchlassphase eintreten. Es sollten etwa alternierend im wesentlichen Hälften des gemeinsamen Strahlenganges abgedeckt werden. Bei der Verwendung eines einzigen drehenden Teiles, das eine Drehachse mit zumindest einer Komponente entlang der optischen Achse des gemeinsamen Strahlenganges hat, etwa beim Verwenden einer drehenden Halbscheibe, gelangt während jeder Drehung phasenweise gleichzeitig Licht von beiden Teilpupillen zur Bildaufnahmevorrichtung, was nicht erwünscht ist.

Um zu verhindern, dass Licht von beiden stereoskopischen Teilstrahlen zur Bildaufnahmevorrichtung gelangt, werden etwa ein Halbzylinder oder ein Teil davon so im gemeinsamen Strahlengang um eine Blendendrehachse rotiert, dass immer zumindest das Lichtbündel des einen Teilstrahles abgedeckt ist. Dazu steht die Blendendrehachse im wesentlichen senkrecht zur optischen Achse des gemeinsamen Strahlenganges und ist im wesentlichen eine Mittelsenkrechte der Verbindungslinie zwischen den Zentren der beiden Teilpupillen in einer Normalebene der optischen Achse. Vorzugsweise wird der Zylinderdurchmesser grösser als der Strahldurchmesser gewählt und der Öffnungswinkel des Zylinderteils ist mindestens so gross, dass es in zwei, zur Drehachse spiegelsymmetrischen Positionen, mindestens genau den ganzen Strahlengang abdeckt.

In einer bevorzugten Ausführung umfasst die Blende ein erstes und ein zweites um eine erste bzw. zweite, Drehachse drehbares Teil. Beide Teile sind im wesentlichen als Teilscheiben bzw. Teilkegel oder Teilzylinder, mit einem von der jeweiligen Drehachse aus gesehenen Durchlass- und einem Abdeck-Winkelbereich ausgebildet. Die beiden Drehachsen sind dabei so angeordnet, dass das erste Teil das Lichtbündel des rechten und das zweite Teil das Lichtbündel des linken Teilstrahles alternierend abdeckt und durchlässt. Wenn der Durchlass-Winkelbereich vorzugsweise kleiner als der Abdeck-Winkelbereich gewählt wird, können die beiden Teile so synchron zu einander drehen, dass ein Teilstrahl vollständig unterbrochen ist, solange auch nur ein kleiner Lichtanteil des anderen Teilstrahles durch die Blende durchtritt. In Randbereichen der drehenden Blendenteile sind gegebenenfalls feste Blendenelemente vorgesehen.

Bei einer bevorzugten Variante werden die Eintrittsstrahlenbündel des Stereomikroskopes beim (einzigen) Hauptobjektiv mittels einer rotierenden Blende mit mindestens jeweils einem durchlassenden und einem sperrenden Teilbereich alternierend abgedeckt und durchgelassen, so dass sie zeitlich hintereinander von den beiden Spiegeln in den gemeinsamen Strahlengang gelenkt werden.

Anstelle der mechanisch bewegten Blenden könnten auch andersartige Blenden zum Einsatz gelangen, sofern sie nur imstande sind, hundertprozentig zwischen einem durchlassenden und sperrenden Zustand zu wechseln.

Es sind auch Ausführungsformen vorgesehen, bei denen anstelle der Blende mindestens ein Trennspiegel im gemeinsamen Strahlengang vorgesehen ist. Es versteht sich von selbst, dass anstelle eines Spiegels auch jedes beliebige andere Umlenkelement, wie etwa ein Prisma, als Trennelement eingesetzt werden kann. Der mindestens eine Trennspiegel wird in einem Bereich mit nur einer Pupille, beispielsweise jener des rechten Teilstrahles, angeordnet, so dass das Lichtbündel dieses Teilstrahles aus dem gemeinsamen Strahlengang ausgelenkt wird. Gegebenenfalls muss dieser Trennspiegel etwas entlang der Achse der gemeinsamen Optik verschiebbar sein, so dass er immer, also auch bei verstellter Optik, im Bereich einer Pupillenebene liegt. Die Probleme, die mit dieser Verstellbarkeit einhergehen, sind viel kleiner als die Probleme mit drehenden bzw. öffnenden und schliessenden, Spiegeln gemäss dem Stande der Technik. Es wird nun nicht das Licht beider Teilstrahlen alternierend zu einer gemeinsamen Bildaufnahmevorrichtung geführt, sondern es werden zwei Bildaufnahmevorrichtungen so angeordnet, dass jede ununterbrochen das Licht eines Teilstrahles erhält.

Nachdem bei allen eingeschobenen oder eingedrehten Blenden der Effekt der sich bewegenden Blende unter Umständen für Aufzeichnungen an einer gemeinsamen Bildaufnahmevorrichtung, z.B. CCD, nachteilig sein kann, ist die Ausführungsform die mindestens einen Trennspiegel anstelle einer bewegten Blende vorsieht, bezüglich Bildstörungen besonders vorteilhaft. Zudem sind immer zeitgleiche Bilder der beiden stereoskopischen Strahlengänge vorhanden, die dann etwa zur Erzeugung eines dreidimensionalen Bildes auf einem Display überlagerbar sind. Bei Bedarf kann insbesondere auch die Phasenlage bestimmt und verarbeitet bzw. dargestellt, werden.

Bei der bevorzugten Lösung ist den beiden Teilstrahlen direkt beim Hauptobjektiv je ein Überlagerungsspiegel zugeordnet. Es versteht sich von selbst, dass anstelle eines Spiegels auch jedes beliebige andere Umlenkelement, wie etwa ein Prisma, als Uberlagerungselement eingesetzt werden kann. Die beiden Uberlagerungsspiegel sind parallel ausgerichtet und sowohl in der Richtung entlang der optischen Achse des gemeinsamen Strahlenganges als auch in einer Richtung quer zu dieser Achse gegeneinander versetzt angeordnet. Der gemeinsame Strahlengang beginnt beim ersten Oberlagerungsspiegel, da dort das vom zweiten Oberlagerungsspiegel kommende Licht seitlich am ersten Oberlagerungsspiegel vorbei sich zusammen mit dem Licht vom ersten Überlagerungsspiegel entlang der optischen Achse des gemeinsamen Strahlenganges ausbreitet. Weil zumindest der erste, vorzugsweise aber auch der zweite Überlagerungsspiegel im Bereich einer Pupillenebene liegt, gelangt von jedem Teilstrahl eine Teilpupille in den gemeinsamen Strahlengang. Deshalb kann am Ende des gemeinsamen Strahlenganges von jedem Teilstrahl ein volles Bild, jedoch mit verminderter Intensität dargestellt werden. Die beiden Teilpupillen sind im gemeinsamen Strahlengang, wie am Anfang bzw. beim ersten Spiegel vorzugsweise symmetrisch beiderseits der gemeinsamen optischen Achse angeordnet.

Vorzugsweise wird vorgesehen, dass die Stereobasis durch eine Parallelverschiebung mindestens eines Überlagerungsspiegels verstellbar ist. Gegebenenfalls wird dabei das Hauptobjektiv parallel so verschoben, dass die beiden Pupillen der stereoskopischen Teilstrahlen im wesentlichen symmetrisch zur Achse des Hauptobjektives angeordnet sind. Eine grösstmögliche Verstellbarkeit der Stereobasis wird von einer Ausführungsform ermöglicht, bei der zwei parallele Spiegel beim Hauptobjektiv angeordnet sind, von denen mindestens einer parallel in der Richtung der Achse des gemeinsamen Strahlenganges verschiebbar ist. Die grösste Stereobasis bzw. der grösste Abstand zwischen den Pupillen der beiden Teilstrahlen, wird durch die Anordnung der Spiegel in einander gegenüberliegenden Randbereichen des Hauptobjektives erreicht. Die kleinste Stereobasis bzw. lediglich ein Strahlengang, wird erhalten, wenn die beiden Spiegel entlang einer Trennlinie durch die Achse des gemeinsamen Strahlenganges aneinander anschliessen. In einer bevorzugten Ausführung liegt diese Trennlinie in der Ebene, die durch die Achse des Hauptobjektives und die Achse des gemeinsamen Strahlenganges aufgespannt wird.

Bei der Verwendung von nur je einem Überlagerungsspiegel sind die beiden getrennten Teilstrahlengänge asymmetrisch ausgebildet und haben daher bis zur gemeinsamen Strahlenführung unterschiedliche Längen. Dadurch ergibt sich eine Phasenverschiebung zwischen den im gemeinsamen Strahlengang parallel laufenden Teilstrahlen. Wenn die Phaseninformation verwendet werden soll, werden die getrennten Strahlengänge gleich lang, vorzugsweise symmetrisch, ausgebildet. Dazu werden etwa beim Hauptobjektiv zwei Spiegel symmetrisch zur Achse des Hauptobjektives angeordnet, so dass die Teilstrahlen nach den Spiegeln gegeneinander gerichtet sind und durch mindestens einen weiteren Spiegel parallel in den gemeinsamen Strahlengang einführbar sind. Die beiden Spiegel, von denen das Licht in den gemeinsamen Strahlengang eingeht, müssen im wesentlichen im Bereich einer Pupillenebene sein, damit die Teillichtbündel lediglich die Lichtintensität der Bilder und nicht den Bildausschnitt bzw. die Feldblende, verkleinern.

Die Lichtintensität jedes Teilstrahles wird auf die Hälfte reduziert, weil maximal die halbe Pupille jedes Teilstrahles verwendet wird. Es zeigt sich aber, dass die maximal mögliche Lichtintensität bei der erfindungsgemässen Lösung mit in der gemeinsamen Optik zeitlich überlagerten, räumlich aber in Pupillenebenen getrennten Lichtbündeln, höher ist, als bei polarisierten, überlagerten und vor der Bildaufnahmevorrichtung mittels polarisationsabhängiger Strahlenteiler getrennter Teilstrahlen.

Lösungen, bei denen bewegte Spiegel alternierend das Licht einer ganzen Pupille jedes Teilstrahles in die gemeinsame Optik führen, haben gegenüber von erfindungsgemässen Lösungen mit Teilpupillen der beiden Teilstrahlengänge, die zudem alternierend abgedeckt werden, eine im wesentlichen doppelt so grosse Lichtintensität. Bei der erfindungsgemässen Lösung sind aber keine bewegten Spiegel vorgesehen, so dass ihr Aufbau wesentlich einfacher und somit vorteilhafter ist. Zudem sind erfindungsgemässe Ausführungen vorgesehen, bei denen die Teilstrahlen nicht alternierend auf eine gemeinsame, sondern ununterbrochen auf getrennte Bildaufnahmevorrichtungen abgebildet werden. Da die realisierbare Lichtintensität bei alternierender Teilstrahlabbildung aufgrund des Zeitfaktors mindestens um die Hälfte reduziert wird, kann bei ununterbrochener Darstellung von Halbpupillen im wesentlichen die gleiche Lichtintensität, wie bei der Lösung mit bewegten Spiegeln, erreicht werden.

Die erfindungsgemässen Lösungen ermöglichen eine Aufnahme der beiden stereoskopischen Bilder mit kleinem Lichtverlust unter Verwendung einfacher Bauteile. Sowohl drehende Blenden, wie auch im wesentlichen feste Spiegel, sind gegenüber bewegten Spiegeln deutlich einfacher aufgebaut und einsetzbar.

Der Betrachter erhält ein 3-D-Bild zu Gesicht. Vorteilhaft können dadurch z.B. Magnetresonanz-Stereo-Bilder den aktuell gesehenen Bildern überlagert werden. Bei der Anwendung eines solchen Stereomikroskopes als Operationsmikroskop ergibt dies für den Operateur besondere Vorteile, zumal er das gesehene Bild besser deuten kann. Andererseits könnten die eingespiegelten Bilder auch andere Informationen beinhalten, z.B. über die Steuerung von Geräten oder des Mikroskopes selbst. In diesem Zusammenhang wird auf folgende Schweizer Patentanmeldungen verwiesen: CH 3890/93-3; CH 135/94-3; CH 198/94-5; CH 949/94-2. Eine Kombination der Lehren dieser Anmeldungen mit der vorliegenden ist besonders sinnvoll.

Die Erfindung ist insbesondere im Zusammenhang mit einem Stereomikroskop beschrieben. Im weitesten Sinn kann sie jedoch auch sinnvoll mit beliebigen anderen stereoskopischen Strahlengängen angewendet werden. Insofern sind die Ansprüche auch entsprechend breit auszulegen.

Weitere Details und Ausführungen der Erfindung ergeben sich aus der Zeichnung. Die dort dargestellten Figuren zeigen:
- Fig. 1: Perspektivische Übersichtsdarstellung einer Anordnung mit einem Hauptobjektiv und zwei Spiegeln, bei der das Licht von zwei seitlich zur Achse der gemeinsamen Optik versetzten Teilpupillen in die gemeinsame Optik gelangt;
- Fig.2: Seitenansicht einer Anordnung mit einem Hauptobjektiv, zwei Spiegeln, einer bewegbaren Blende und einer Bildaufnahmevorrichtung;
- Fig.3: Draufsicht einer Anordnung mit einem Hauptobjektiv, zwei Spiegeln und zwei bewegbaren Blenden;
- Fig.4: eine Blende mit zwei drehbaren Blendenteilen;
- Fig.5: ein kegelförmiges und ein scheibenförmiges Blendenteil;
- Fig.6: eine Blende mit zwei kegeligen Blendenteilen;
- Fig.7: eine Variante, bei der die Achse des gemeinsamen Strahlenganges nicht schief zur Achse des Hauptobjektives steht;
- Fig.8: eine weitere Variante, bei der nur im einen Teilstrahl Spiegel angeordnet sind; und
- Fig.9: eine weitere Variante, bei der die beiden Teilstrahlengänge im wesentlichen gleich lang sind.

Die Erfindung ist auf die dargestellten Ausführungsbeispiele nicht eingeschränkt. Vor allem in Kombination mit den Lehren der oben angeführten Schweizer Patentanmeldungen lassen sich noch beliebige Varianten darstellen. So sind nicht nur rotierende und translatorische Bewegungen für die Blende, sondern auch stationäre elektrooptische Blenden mit hundertprozentigem Umschaltvermögen und ohne Lichtintensitätsverlust im durchlassenden Bereich sind denkbar, ebenso wie mechanische Blenden, die ein- und ausgeschwenkt werden können. Verwendete Spiegel können in vielen Fällen auch durch ähnlich wirkende Prismen ersetzt werden.

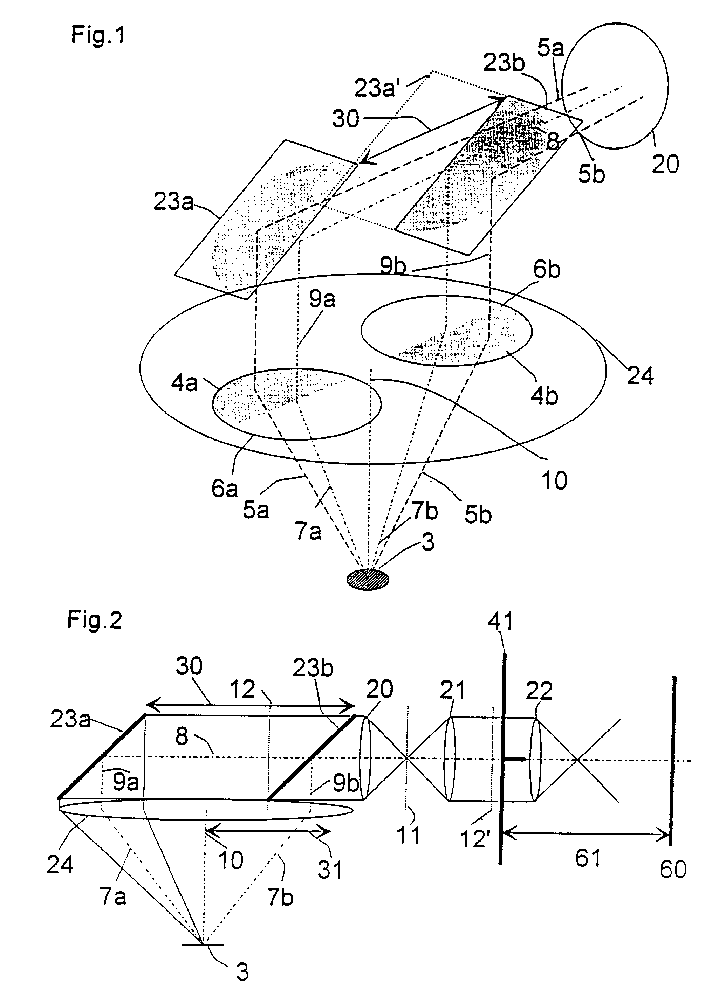

Fig. 1 zeigt eine Anordnung mit einem Hauptobjektiv 24 und zwei Überlagerungsspiegeln 23a,b bei der das Licht von zwei, seitlich zu einer Achse 8 der gemeinsamen Optik versetzten, Teilpupillen in die gemeinsame Optik gelangt. Das Licht von an den Spiegeln 23a und 23b gespiegelten Teilpupillen 4a, 4b, die im Bereich des Hauptobjektives 24 eingezeichnet sind gelangt somit durch eine erste Linse 20 der gemeinsamen Optik. Da es sich zwischen dem Hauptobjektiv 24 und der Linse 20 im wesentlichen um eine parallele Strahlausbreitung handelt, liegen auch die Spiegel 23a und 23b im Bereich von Pupillenebenen. Die beiden gleichzeitig in einen gemeinsamen Strahlengang eingeführten Teilpupillen 4a, 4b umfassen die Bildinformation von zwei stereoskopischen Teilstrahlengängen. Diese Bildinformation wird bei einem Stereomikroskop nach dem Stande der Technik etwa durch das alternierende Abbilden der ganzen Pupillen 6a, 6b des linken und des rechten Strahlenganges über eine gemeinsame Optik zu einer Bildaufnahmevorrichtung geführt.

Eine Stereobasis ergibt sich dadurch, dass ein Objekt 3 über zwei, zur Achse 10 des Hauptobjektives 24 unterschiedlich geneigte Teilstrahlen mit den Achsen 7a, 7b betrachtet wird. Vom Hauptobjektiv 24 gelangen die beiden Teilstrahlen entlang der Achsen 9a bzw. 9b, und 8 in die gemeinsame Optik. Die zur Abbildung verwendeten Teilpupillen sind um die, zur Verdeutlichung eingezeichneten, Zentrumsstrahlen 5a, 5b ausgebildet. Indem nur Teilpupillen in die gemeinsame Optik gelangen, wird nicht die Feldblende der beiden stereoskopischen Bilder verändert, sondern lediglich deren Helligkeit im wesentlichen gleichmässig über das ganze Bild verkleinert.

Die beiden Spiegel 23a, 23b lenken die Teilstrahlen so ab, dass deren beide Achsen 9a und 9b in die Achse 8 gebrochen werden. Vorzugsweise beträgt dabei der Winkel zwischen den Achsen 9a, 9b und der Achse 8 90°. Die Überlagerung der beiden Teilpupillen 4a, 4b in der gemeinsamen Optik wird dadurch bewirkt, dass die beiden Spiegel 23a, 23b auf einander entgegengesetzten Seiten der Achse 8, direkt an diese anschliessend angeordnet sind. In der dargestellten Ausführungsform liegen die Spiegelberandungslinien bei der Achse 8 in einer durch die Achsen 8 und 10 aufgespannten Ebene. Durch eine Verschiebbarkeit 30 mindestens eines Spiegels wird die Stereobasis verstellbar. Die maximale Distanz zwischen den abgebildeten Teilpupillen 4a, 4b ist durch die Ausdehnung des Hauptobjektivs beschränkt. Weil die beiden Spiegel 23a, 23b durch die Verschiebung 30 auch nebeneinander angeordnet werden können, kann die Stereobasis bis auf Null verkleinert werden. Die beiden Teilpupillen ergänzen sich dabei zu einer vollen Pupille eines Strahlenganges.

Fig. 2 zeigt die Anordnung gemäss Fig. 1 in einer Schnittdarstellung. Zudem ist eine Verschiebbarkeit 31 des Hauptobjektives 24 senkrecht zur Achse 10 eingezeichnet. Diese Bewegung des Hauptobjektives wird vorzugsweise beim Verstellen der Stereobasis so ausgeführt, dass die Pupillen der beiden Teilstrahlen im Bereich des Hauptobjektives im wesentlichen immer symmetrisch zur Achse 10 angeordnet sind.

In der Fig. 2 sind zur Veranschaulichung der gemeinsamen Optik drei Linsen 20, 21, 22 dargestellt. Den im Bereich des parallelen Strahlenganges liegenden Pupillenebenen 12 sind konjugierte Pupillenebenen in der gemeinsamen Optik zugeordnet. Es versteht sich von selbst, dass in der gemeinsamen Optik auch Zwischenbildebenen 11 auftreten können. Beispielhaft ist im Bereich des parallelen Strahlenganges zwischen den Linsen 21 und 22 eine konjugierte Pupillenebene 12' eingezeichnet. Eine Blendenvorrichtung 41, die in einer konjugierten Pupillenebene 12' alternierend die Teilpupille des einen Teilstrahles abdeckt und jene des anderen Teilstrahles freilässt, gewährleistet, dass der Bildaufnahmevorrichtung 60 alternierend ungestörte Bilder über je nur einen der beiden stereoskopischen Teilstrahlen zugeführt werden. Um den Abdeckvorgang der Blende mit der Bildaufnahme zu synchronisieren, ist vorzugsweise eine Synchronisationseinrichtung 61 mit der Blende 41 und der Bildaufnahmevorrichtung 60 verbunden.

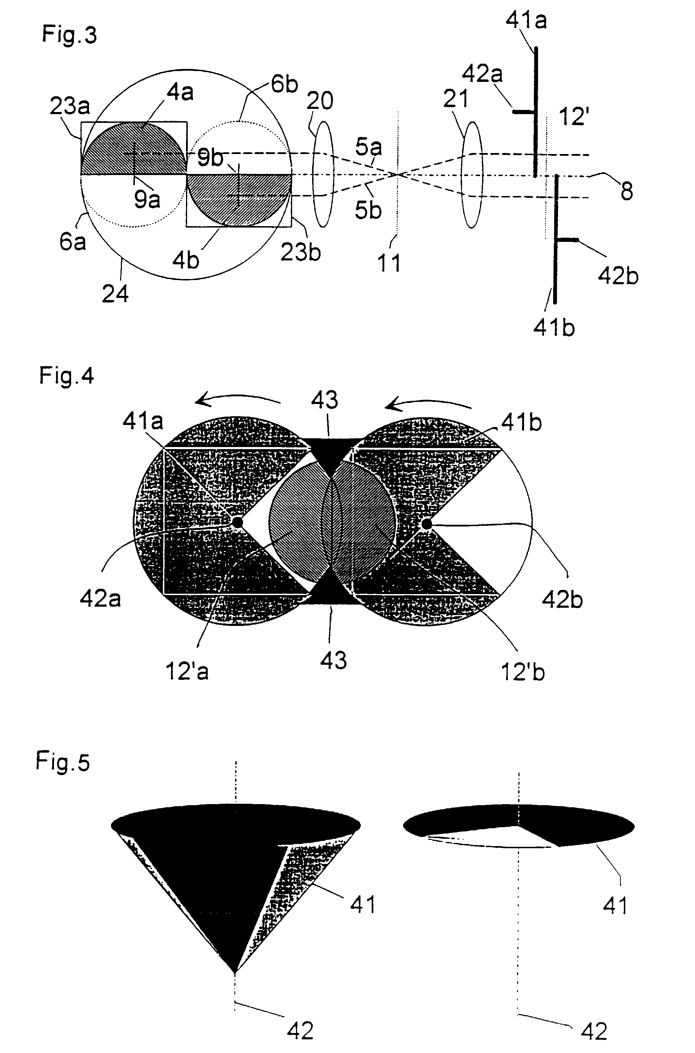

Fig. 3 zeigt eine Draufsicht der Anordnung gemäss Fig. 1 bei der nach der Blende 21 im Bereich einer konjugierten Pupillenebene 12' eine Blendenvorrichtung mit zwei um Drehachsen 42a, 42b rotierenden Scheiben 41a und 41b angeordnet ist, welche Scheiben je mindestens einen Durchtritts- und einen Abdeckbereich umfassen. In dieser Ansicht ist klar ersichtlich, dass beide Scheiben 41a, 41b im wesentlichen je einander gegenüberliegende Querschnittshälften des gemeinsamen Strahlenganges abdecken können. Die Zentrums) strahlen 5a und 5b führen in diesen beiden Querschnittshälften je durch eine der beiden Scheiben. Indem das Lichtbündel bzw. die Teilpupille, des einen stereoskopischen Teilstrahles vom Abdeckbereich der einen Scheibe abgedeckt wird und das Lichtbündel bzw. die Teilpupille, des anderen Teilstrahles durch den Durchtrittsbereich der anderen Scheibe durchtritt, wird gewährleistet, dass nur gerade ein Teilbild zur Bildaufnahmevorrichtung gelangt.

Gemäss Fig. 4 sind etwa ein Viertel jeder Scheibe als Durchlassbereich und etwa drei Viertel jeder Scheibe als Abdeckbereich ausgebildet. Wenn die beiden Scheiben parallel bzw. phasengleich, drehen, ist im wesentlichen immer eine Teilpupille vollständig abgedeckt. Das Verhältnis zwischen Abdeck- und Durchtrittsbereich hängt vom Abstand der Drehachsen von der optischen Achse 8 und von der Grösse des Querschnittbereiches ab. Der Abdeckbereich muss mindestens die halbe Scheibe und zweimal den Winkelbereich, unter dem der gemeinsame Strahlengang von der Drehachse aus erscheint, umfassen. Die von den Scheiben nicht abdeckbaren oberen und unteren Randbereiche werden vorzugsweise von Resten Blendenteilen 43 abgedeckt.

Fig. 5 zeigt, dass die um Drehachsen 42 drehenden Blendenteile 41 etwa scheiben- oder auch kegelförmig ausgebildet sein können.

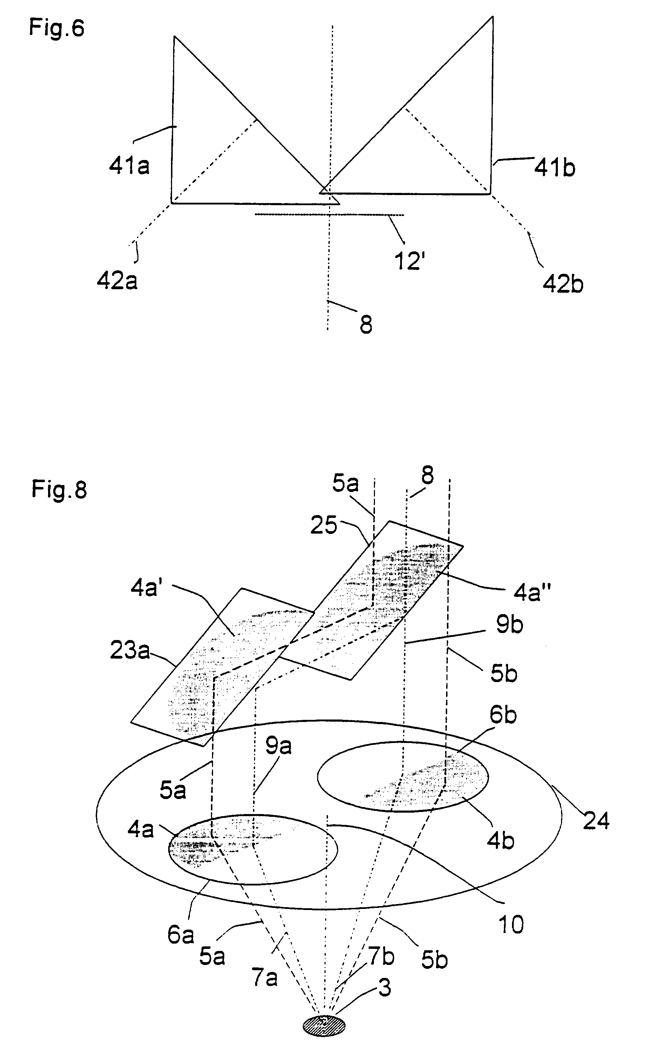

Fig. 6 zeigt, dass die Drehachsen 42a und 42b auch in einem Winkel zur optischen Achse 8 verlaufen können.

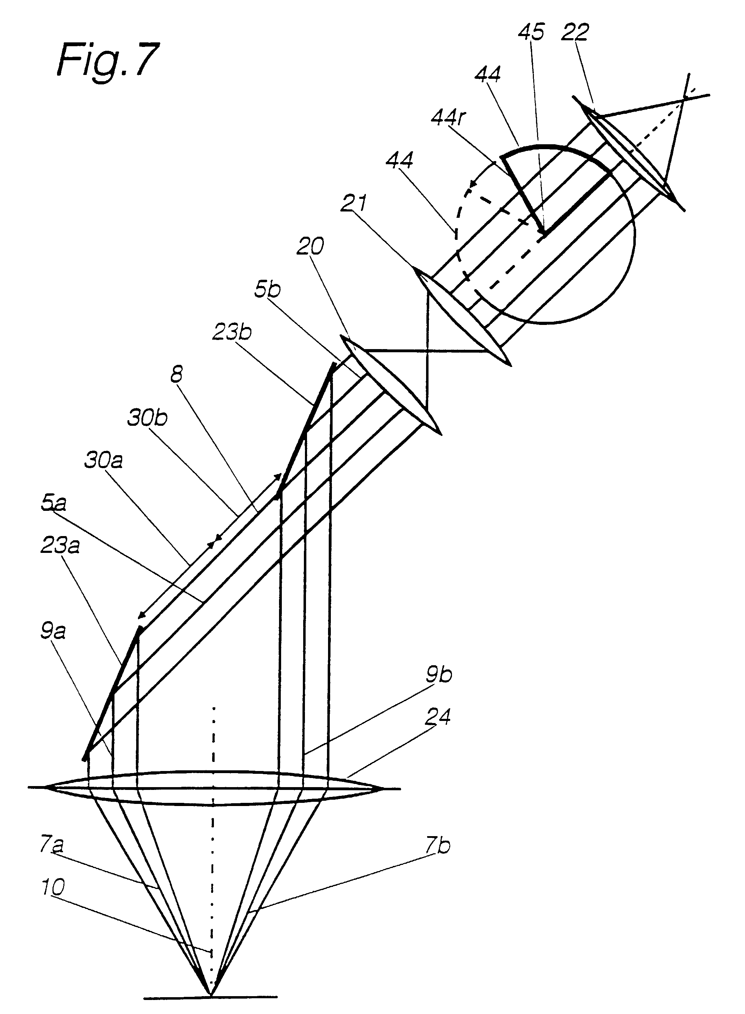

Fig. 7 zeigt eine Anordnung, bei der zwischen der Achse 8 der gemeinsamen Optik und der Achse 10 des Hauptobjektives ein Winkel von mehr als 90° liegt. Zudem stehen die Spiegelberandungslinien bei der Achse 8 im wesentlichen senkrecht auf einer durch die Achsen 8 und 10 aufgespannten Ebene. Zum Verstellen der Stereobasis werden vorzugsweise beide Spiegel 23a, 23b auf den Bewegungsbereichen 30a und 30b entlang der Achse 8 verschiebbar ausgebildet. Wenn die beiden Spiegel 23a, 23b aneinander anschliessen, wird im wesentlichen eine aus zwei aneinander anschliessenden Teilpupillen bestehende Gesamtpupille abgebildet.

Gegebenenfalls ist in einer Pupillenebene des gemeinsamen Strahlenganges eine teilzylinderförmige Blende 44 vorgesehen, die um eine die optische Achse schneidende Drehachse 45 drehbar ist. Die Drehachse ist dabei quer, vorzugsweise senkrecht, zur Achse 8 angeordnet. Der Zylinderteil 44 muss in einer ersten Stellung mindestens den ganzen gemeinsamen Strahlengang abdecken. Damit nicht ein Halbzylinder benötigt wird, wird der Zylinderradius 44r grösser als die Hälfte des Durchmessers der gemeinsamen Optik gewählt. Während der Drehung des Zylinderteils 44 von der mit ausgezogenen Linien gezeichneten zur mit gestrichelten Linien gezeichneten Position ist eine Strahlhälfte abgedeckt und die andere frei.

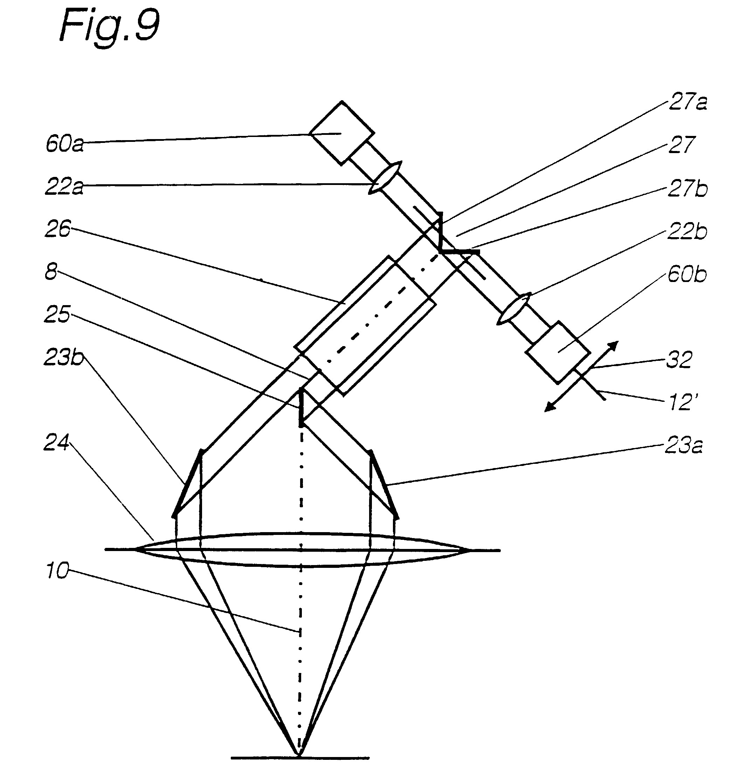

Fig. 8 zeigt eine Anordnung, bei der die gemeinsame optische Achse 8 parallel zur Achse 10 des Hauptobjektives verläuft. Die beiden Überlagerungsspiegel 23a und 25 lenken den einen bzw. linken, Strahl so zweimal um 90° ab, dass er neben den nicht abgelenkten zweiten bzw. rechten, Strahl zu liegen kommt, bzw. dass die beiden Teilpupillen beiderseits der gemeinsamen Achse 8 und somit beiderseits der Achse 9b zu liegen kommen. Auf dem Spiegel 25 ist die abgebildete Teilpupille 4a' des linken Strahlenganges eingezeichnet. In die gemeinsame Optik gelangen die Lichtbündel von den Teilpupillen 4a' und 4b.

Fig. 9 zeigt eine Anordnung, bei der beide Teilstrahlengänge im wesentlichen gleiche Länge haben. Dazu sind die beiden Überlagerungsspiegel 23a und 23b so gegeneinander gerichtet, dass die beiden an den Spiegeln umgelenkten Teilstrahlen im Bereich der Achse des Hauptobjektives aufeinander treffen. In diesem Bereich wird mindestens ein Teilstrahl durch einen weiteren Spiegel so abgelenkt, dass Teilpupillen beider Strahlen nebeneinander liegen und sich die Strahlen entlang einer gemeinsamen Achse 8 durch die gemeinsame Optik 26 fortsetzen. Bei einer Pupillenebene bzw. konjugierten Pupillenebene 12', wird der gemeinsame Strahl vorzugsweise von einer Trennvorrichtung 27 in zwei Teilstrahlen aufgeteilt.

Da die Teilpupillen des linken und des rechten stereoskopischen Teilstrahls auf einander gegenüberliegenden Seiten der Achse 8 liegen, kann die Trennung beispielsweise mit mindestens einem Trennspiegel, der im Bereich der einen Teilpupille angeordnet ist, durchgeführt werden. In der dargestellten Anordnung sind zwei Trennspiegel 27a, 27b vorgesehen. Die beiden Teilpupillen werden von diesen Spiegeln etwa durch weitere optische Elemente, wie beispielsweise Linsen 22a, 22b, auf je eine Bildaufnahmevorrichtung 60a, 60b abgebildet. Wenn in den beiden Strahlengängen eine ungleiche Anzahl von Spiegelungen vorgesehen ist, so wird die Bildinformation vorzugsweise so transformiert, dass zwei überlagerbare, und nicht spiegelverkehrte, Bilder zur Erzeugung eines Stereobildes verwendet werden.

Weil sich die Lage der Pupillenebenen durch eine Verstellung der gemeinsamen Optik ändern kann, wird vorzugsweise eine Nachführbewegung 32 bzw. Nachführvorrichtung so vorgesehen, dass die Trennvorrichtung 27 immer im Bereich einer gewünschten konjugierten Pupillenebene liegt. Anstelle einer räumlichen Trennvorrichtung kann auch eine zeitliche Trennung, insbesondere durch Blenden vorgesehen werden. Entsprechend wird die Nachführvorrichtung zum Nachführen der Blende verwendet.

Zur Steuerung der Nachführvorrichtung bzw. Verschiebungsvorrichtung ist vorzugsweise eine Steuerung vorgesehen, die die aktuelle Lage einer Pupillenebene bestimmt und die Nachführvorrichtung so steuert, dass die Trennvorrichtung zur aktuellen Pupillenebene bewegt wird.

Es versteht sich von selbst, dass bei erfindungsgemässen Ausführungen mit Blenden, anstelle der Blenden jeweils Umlenkvorrichtungen verwendet werden können. Die in Pupillenebenen des gemeinsamen Strahlenganges räumlich getrennten Teilpupillen werden somit erfindungsgemäss entweder mittels Blenden alternierend abgedeckt, oder mit mindestens einem Trennspiegel, klar räumlich getrennt bzw. von der gemeinsamen Achse 8 weggeführt. Anstelle von Trennspiegeln sind auch andere Elemente, wie etwa Prismen, verwendbar. Es muss jedoch gewährleistet sein, dass der Lichtverlust so klein wie möglich bleibt.

### Bezugszeichenliste

- 3: Objekt
- 4 a,b: halbkreisförmige Teilpupille des linken bzw. rechten Strahlenganges
- 5 a,b: Zentrumsstrahl des linken bzw. rechten Strahlenganges
- 6 a,b: Pupille des linken bzw. rechten, Strahlenganges
- 7 a,b: optische Achse des linken bzw. rechten, Strahlenganges zwischen Objekt und Hauptobjektiv
- 9 a,b: optische Achse des linken bzw. rechten, Strahlenganges zwischen Hauptobjektiv und Überlagerungsvorrichtung
- 8: Achse des gemeinsamen Strahlenganges
- 10: optische Achse des Hauptobjektivs
- 11: Zwischenbildebene (konjugiert)
- 12: Pupillenebene
- 12': konjugierte Pupillenebene
- 12' a,b: konjugierte Pupillenebene des linken bzw. rechten, Strahlenganges

- 20,21,22: Linsen
- 23a: Pupillenteilender Spiegel, beweglich
- 23b: Pupillenteilender Spiegel, fest
- 24: Hauptobjektiv
- 25: zweiter Überlagerungsspiegel des linken Strahlenganges
- 26: gemeinsame Optik
- 27: Umlenkvorrichtung mit zwei Trennspiegeln
- 27 a,b: Trennspiegel des linken bzw. rechten, Strahlenganges

- 30: Bewegung des pupillenteilenden Spiegels
- 31: Bewegung des Hauptobjektivs
- 32: Bewegung der Trennvorrichtung

- 41,41a,b: rotierende Blenden
- 42: Blendenachsen
- 43: feste Zusatzblende
- 44: Zylinderteil-Blende
- 45: Achse der Zylinderteil-Blende

- 60: Bildaufnahmevorrichtung
- 61: Synchronisationseinrichtung zwischen Blende und Bildaufnahmevorrichtung

## Patentansprüche

1. Stereomikroskop mit:
einem Hauptobjektiv (24);
einer Überlagerungsvorrichtung, die mindestens zwei räumlich getrennte Überlagerungsspiegel (23a,23b,25) umfasst, die so im Strahlengang des Hauptobjektivs (24) angeordnet sind, dass zwei räumlich getrennte Lichtbündel gleichzeitig in einen gemeinsamen Strahlengang überlagert werden;
einer Trennvorrichtung (41,44;27) zur Trennung der zwei überlagerten Lichtbündel; und
wenigstens einer Bildaufnahmevorrichtung (60;60a, 60b), der im Betriebszustand zumindest in vorgegebenen Zeitabschnitten nur ein Bild entweder von dem einen oder dem anderen der beiden Lichtbündel zugeführt wird,
**dadurch gekennzeichnet,**
dass eine gemeinsame Optik (20,21,22;26) vorgesehen ist, die die zwei Uberlagerungsspiegel (23a,23b) so auf die Trennvorrichtung (41,44;27) abbildet, dass die zwei Lichtbündel in der Trennvorrichtung (41,44;27) räumlich zumindest teilweise getrennt sind.

2. Stereomikroskop nach Anspruch 1, dadurch gekennzeichnet, dass mindestens eines der folgenden Merkmale vorgesehen ist;
a) die Überlagerungsspiegel (23a,23b,25) sind vorzugsweise unter einem Winkel von im wesentlichen 45° zur Hauptobjektivachse (10) geneigt und parallel zueinander ausgerichtet; sie sind sowohl in der Richtung entlang der optischen Achse des gemeinsamen Strahlenganges, als auch in einer Richtung quer zu dieser gemeinsamen Achse gegeneinander verschoben und sie weisen insbesondere je eine, durch die gemeinsame Achse führende Berandungslinie auf, welche Berandungslinien beiderseits der von der gemeinsamen Achse und der Hauptobjektivachse (10) aufgespannten Ebene liegen;
b) die Überlagerungsspiegel (23a,23b) sind im Bereich des im wesentlichen parallelen Strahlenganges eines ersten Teilstrahles ausgebildet, so dass sie den ersten Teilstrahl so umlenken, dass eine Teilpupille dieses Teilstrahls bezüglich einer gemeinsamen Achse spiegelbildlich zur Teilpupille eines zweiten, vorzugsweise nicht umgelenkten, Teilstrahls auf den Überlagerungsspiegel (23a,23b) zu liegen kommt; und
c) die Überlagerungsvorrichtung umfasst mindestens drei Überlagerungsspiegel (23a,23b,25) mit Teilpupillen, wobei zwei davon die beiden Teilstrahlen entlang von getrennten - im wesentlichen gleich langen, insbesondere im wesentlichen zur Hauptobjektivachse (10) symmetrisch angeordneten - Wegen zu einem Überlagerungsbereich umlenken, wo mindestens ein Uberlagerungsspiegel (25) die Teilstrahlen in eine gemeinsame Optik (26) einführbar macht.

3. Stereomikroskop nach Anspruch 1 oder 2, dadurch gekenzeichnet, dass eine Verstellvorrichtung zum Verstellen der Stereobasis vorgesehen ist, welche Vorrichtung mindestens einen Überlagerungsspiegel (23a) im wesentlichen entlang der Achse (8) des gemeinsamen Strahlenganges parallel verschiebbar macht und gegebenenfalls das Hauptobjektiv (24) so parallel verschiebbar macht, dass die beiden in die gemeinsame Optik (26) gelangenden Teilstrahlen durch im wesentlichen symmetrisch zur Hauptobjektivachse (10) angeordnete Teilbereiche des Hauptobjektives (24) führen.

4. Stereomikroskop nach einem der Ansprüche 1 bis 3, dadurch gekennzeichnet, dass die Trennvorrichtung zumindest ein Trennelement (41,44,27) umfasst, das bei der Zuführung eines im wesentlichen ungestörten Bildes an eine Bildaufnahmevorrichtung in einer Pupillenebene (12) lediglich im Bereich einer Teilpupille eines stereoskopischen Strahlenganges, und somit in einem Teil eines Durchtrittsquerschnittes des gemeinsamen Strahlenganges, anzuordnen ist.

5. Stereomikroskop nach Anspruch 4, dadurch gekennzeichnet, dass die Trennvorrichtung als Blendenvorrichtung ausgebildet ist und das mindestens eine Trennelement ein bewegbares Blendenelement (41) ist, das alternierend zumindest eine Teilpupille abdeckbar macht und dazu etwa oszillierend einbringbar, insbesondere um eine Achse drehend, einschwenkbar oder einschiebbar ist.

6. Stereomikroskop nach Anspruch 5, dadurch gekennzeichnet, dass die Blendenvorrichtung zwei synchron um zwei Drehachsen drehende Teile (41a,b), wie etwa Scheiben, Kegel oder Zylinder umfasst, welche Durchtrittsbereiche haben, die abwechselnd im wesentlichen eine Hälfte des gemeinsamen Strahlenganges frei geben und die andere Hälfte abdecken.

7. Stereomikroskop nach Anspruch 5, dadurch gekennzeichnet, dass das bewegbare Blendenelement als Halbzylinder (41), oder als Teil davon, ausgebildet ist und so um eine, im wesentlichen in einer Normalebene zur optischen Achse des gemeinsamen Strahlenganges und insbesondere auf der Mittelsenkrechten der Verbindungslinie zwischen den Zentren der beiden Teilpupillen (12a,12b) liegende, Drehachse drehbar ist, dass immer zumindest das Lichtbündel des einen Teilstrahles abgedeckt ist.

8. Stereomikroskop nach Anspruch 4, dadurch gekennzeichnet, dass die Trennvorrichtung als Umlenkvorrichtung (27) ausgebildet ist und mit mindestens einem Umlenkelement, vorzugsweise einem Trennspiegel (27a,b) der bzw. das im wesentlichen in einer Pupillenebene im Bereich einer Teilpupille eines stereoskopischen Strahlenganges angeordnet ist, einen Teilstrahlengang umlenkt und insbesondere beide Teilstrahlen getrennten Bildaufnahmevorrichtungen (60a,60b) zuführbar macht.

9. Stereomikroskop nach einem der Ansprüche 1 bis 8, dadurch gekennzeichnet, dass die Trennvorrichtung (41,44) entlang der Achse des gemeinsamen Strahlenganges verschiebbar ist und insbesondere eine Steuerung und eine Verschiebungsvorrichtung vorgesehen sind, wobei die Steuerung die aktuelle Lage einer Pupillenebene (12) bestimmbar macht und die Verschiebungsvorrichtung die Trennvorrichtung zur bestimmten Lage verschiebbar macht.

## Claims

1. Stereomicroscope with a main objective (24), a superimposing device which comprises at least two spatially separate superimposing mirrors (23a, 23b, 25), which are so arranged in the ray path of the main objective (24) that two spatially separated light beams are superimposed in a common ray path at the same time, a separating device (41, 44; 27) for the separation of the two superimposed light beams and at least one image-recording device (60; 60a, 60b), to which only one image either from the one or the other one of both the light beams is conducted at least in preset time intervals in the operational state, characterised thereby, that a common optical system (20, 21, 22; 26) is provided, which so images the two superimposing mirrors (23a, 23b) onto the separating device (41, 44; 27) that the two light beams are spatially separated at least partially in the separating device (41, 44; 27).

2. Stereomicroscope according to claim 1, characterised thereby, that at least one of the following features is provided:
a) the superimposing mirrors (23a, 23b, 25) are preferably inclined to the main objective axis (10) at an angle of substantially 45° and oriented one parallelly to the other; they are displaced one relative to the other in the direction along the optical axis of the common ray path as well as also in a direction transverse to this common axis and, in particular, they each display a respective boundary line which leads through the common axis, which boundary lines lie at both sides of the plane spanned by the common plane and the main objective axis (10);
b) the superimposing mirrors (23a, 23b) are formed in the region of the substantially parallel ray path of a first partial ray so that they so deflect the first partial ray that a partial pupil of this partial ray comes to lie on the superimposing mirror (23a, 23b) in mirror image, with respect to a common axis, to the partial pupil of a second, preferably not deflected partial ray; and
c) the superimposing device comprises at least three the superimposing mirrors (23a, 23b, 25) with partial pupils, wherein two of these deflect both the partial rays along separate, substantially equally long paths, which are in particular arranged to be substantially symmetrical to the main objective axis (10), to a superimposition region, where at least one superimposing mirror (25) makes the partial rays introducible into a common optical system (26).

3. Stereomicroscope according to claim 1 or 2, characterised thereby, that an adjusting device is provided for the adjustment of the stereobasis, which device makes at least one superimposing mirror (23a) displaceable parallelly substantially along the axis (8) of the common ray path and in a given case makes the main objective (24) so displaceable parallelly that both the partial rays getting into the common optical system lead through partial regions of the main objective (24), which are arranged to be substantially symmetrical to the main objective axis (10).

4. Stereomicroscope according to one of the claims 1 to 3, characterised thereby, that the separating device comprises at least one separating element (41, 44, 27), which - in the case of the feeding of a substantially undisturbed image to an image-recording device in a pupil plane (12) - is to be arranged merely in the region of a partial pupil of a stereoscopic ray path and thus in a part of a passage cross-section of the common ray path.

5. Stereomicroscope according to claim 4, characterised thereby, that the separating device is constructed as light stop device and the at least one separating element is a movable light stop element (41), which makes at least one partial pupil coverable in alternation and for this purpose is introducible in possibly oscillating manner, in particular rotating about an axis, to be pivotable or pushable in.

6. Stereomicroscope according to claim 5, characterised thereby, that the light stop device comprises two parts (41a, 41b), such as perhaps discs, cones or cylinders, which rotate synchronously about two axes of rotation and have passage regions which alternately clear substantially one half of the common ray path and cover the other half.

7. Stereomicroscope according to claim 5, characterised thereby, that the movable light stop element (41) is constructed as a half cylinder or a part thereof and so rotatable about a rotational axis, which lies substantially in a plane normal to the optical axis and in particular on the centre normal of the connecting line between the centres of both the partial pupils (12a, 12b), that at least the light beam of one partial ray is always covered.

8. Stereomicroscope according to claim 4, characterised thereby, that the separating device is constructed as deflecting device (27) and by at least one deflecting element, preferably a separating mirror (27a, 27b), which is arranged substantially in a pupil plane in the region of a partial pupil of a stereoscopic ray path, deflects one partial ray path and, in particular, makes both partial rays feedable to separate image recording devices (60a, 60b).

9. Stereomicroscope according to one of the claims 1 to 8, characterised thereby, that the separating device (41, 44) is displaceable along the axis of the common ray path and, in particular, a control and a displacing device are provided, wherein the control makes the actual position of a pupil plane (12) determinable and the displacing device makes the separating device displaceable to the determined position.

## Revendications

1. Stéréomicroscope avec :
un objectif principal (24) ;
un dispositif de superposition, qui comporte au moins deux miroirs de superposition (23a, 23b, 25) séparés dans l'espace, qui sont agencés dans la trajectoire des rayons de l'objectif principal (24) de façon que deux faisceaux lumineux séparés dans l'espace soient simultanément superposés dans une trajectoire commune des rayons ;
un dispositif de séparation (41, 44 ; 27) pour la séparation des deux faisceaux lumineux superposés ; et au moins un dispositif de reproduction de l'image (60 ; 60a, 60b) auquel, à l'état de fonctionnement, au moins dans des tranches prédéterminées de temps, une seule image est conduite soit de l'un ou de l'autre des deux faisceaux lumineux,
caractérise en ce que
une optique commune (20, 21, 22 ; 26) est prévue, qui applique les deux miroirs de superposition (23a, 23b) au dispositif de séparation (41, 44 ; 27) de façon que les deux faisceaux lumineux soient au moins partiellement séparés dans l'espace dans le dispositif de séparation (41, 44 ; 27).

2. Stéréomicroscope selon la revendication 1, caractérisé en ce qu'au moins l'une des caractéristiques suivantes est prévue ;
a) les miroirs de superposition (23a, 23b, 25) sont avantageusement inclinés à un angle essentiellement à 45 ° par rapport à l'axe de l'objectif principal (10) et sont dirigés parallèlement l'un à l'autre ; ils sont décalés l'un par rapport à l'autre aussi bien dans la direction le long de l'axe optique de la trajectoire commune des rayons qu'également dans une direction transversale à cet axe commun et ils présentent, en particulier, chacun une ligne de bordure conduisant à travers l'axe commun, lesquelles lignes de bordure se trouvent des deux côtés du plan formé par l'axe commun et l'axe de l'objectif principal (10) ;
b) les miroirs de superposition (23a, 23b) sont configurés dans la zone de la trajectoire essentiellement parallèle des rayons d'un premier rayon partiel, de façon qu'ils dévient le premier rayon partiel pour qu'une pupille partielle de ce rayon partiel par rapport à un axe commun vienne en image miroir par rapport à une pupille partielle d'un second rayon partiel avantageusement non dévié sur les miroirs de superposition (23a, 23b) ; et
c) le dispositif de superposition comporte au moins trois miroirs de superposition (23a, 23b, 25) avec des pupilles partielles, dont deux dévient les deux rayons partiels le long de chemins séparés - essentiellement de même longueur , en particulier agencés essentiellement symétriquement par rapport à l'axe de l'objectif principal (10) vers une zone de superposition où au moins un miroir de superposition (25) permet l'introduction des rayons partiels dans une optique commune (26).

3. Stéréomicroscope selon la revendication 1 ou 2, caractérisé en ce qu'un dispositif de déplacement pour le déplacement de la base stéréo est prévu, lequel dispositif rend mobile parallèlement au moins un miroir de superposition (23a) essentiellement le long de l'axe (8' de la trajectoire commune des rayons, et le cas échéant rend mobile l'objectif principal (24) ; de manière que les deux rayons partiels arrivant dans l'optique commune (26) mènent, à travers des zones partielles agencées essentiellement symétriquement à l'axe de l'objectif principal (10) de l'objectif principal (24).

4. Stéréomicroscope selon l'un des revendications 1 à 3, caractérisé en ce que le- dispositif de séparation comporte au moins un élément de séparation (41, 44, 27) qui, pour l'amenée d'une image essentiellement non perturbée à un dispositif de reproduction de l'image dans un plan de pupille (12), ne doit être agencé que dans la zone d'une pupille partielle d'une trajectoire stéréoscopique des rayons et ainsi dans une partie d'une section transversale de passage de la trajectoire commune des rayons.

5. Stéréomicroscope selon la revendication 4, caractérisé en ce que le dispositif de séparation est configuré comme un dispositif à diaphragme et en ce qu'au moins un élément de séparation est un élément à diaphragme mobile (41) qui rend de f-açon alternée au moins une pupille partielle escamotable et dans ce but est présentable en oscillant, en particulier pivotable vers l'intérieur ou coulissant vers l'intérieur en tournant autour d'un axe.

6. Stéréomicroscope selon la revendication 5, caractérisé en ce que le dispositif à diaphragme comprend deux pièces tournant en synchronisme autour de deux axes de rotation (41a,b) comme des disques, des billes ou des cylindres, qui ont des zones de passage qui alternativement libèrent essentiellement une moitié de la trajectoire commune des rayons et couvrent l'autre moitié.

7. Stéréomicroscope selon la revendication 5 caractérisé en ce que l'élément formant diaphragme mobile est configuré comme un demi-cylindre (41) ou une partie de celui-ci, et est ainsi rotatif autour d'un axe de rotation se trouvant essentiellement dans un plan perpendiculaire à l'axe optique de la trajectoire commune des rayons et en particulier sur la médiatrice de la ligne de liaison entre les centres des deux pupilles partielles (12a, 12b) de façon qu'au moins le faisceau lumineux d'un rayon partiel soit toujours couvert.

8. Stéréomicroscope selon la revendication 4, caractérisé en ce que le dispositif de séparation est configuré comme un dispositif déflecteur (27) et avec au moins un élément déflecteur, avantageusement un miroir séparateur (27a,b) qui est respectivement agencé essentiellement dans le plan de la pupille dans la zone d'une pupille partielle d'une trajectoire de rayons stéréoscopiques, qui dévie une trajectoire des rayons partiels et permet en particulier de conduire les deux rayons partiels à des dispositifs séparés de reproduction de l'image (60a, 60b).

9. Stéréomicroscope selon l'une des revendications 1 à 8, caractérisé en ce que le dispositif de séparation (41, 44) est mobile le long de l'axe de la trajectoire commune des rayons et qu'en particulier une commande et un dispositif de déplacement sont prévus, la commande permettant de déterminer l'action réelle d'un plan de pupille (12), le dispositif de déplacement permettant de déplacer le dispositif de séparation à la position déterminée.
